# DEMANDE DE BREVET EUROPEEN

(11) **EP 1 607 350 A1**
(43) Date de publication de la demande: **21.12.2005**
(21) Numéro de dépôt: 04405364.3
(22) Date de dépôt: 15.06.2004
(51) Int. Cl.: B65G 47/14, B65G 47/66

(54) **Dispositif de fourniture de pièces à bol vibrant**

(71) Demandeur: Lorze AG - Sivatech, 2500 Bienne (CH)
(72) Inventeur: Osler, Valerio, 2015 Areuse (CH)
(74) Mandataire: GLN

(57) **Abrégé**

L'invention concerne un dispositif de fourniture de pièces de petites dimensions, du type comportant :
- un bol vibrant capable de délivrer les pièces (12), une à une, sur un rail (10) dans lequel elles se déplacent sous l'effet des vibrations du bol, et
- un couloir d'alimentation non vibrant (13) disposé dans le prolongement du rail pour recevoir les pièces, mais séparé de lui par un espace (15) destiné à éviter tout contact entre eux.

Le dispositif comporte des moyens (16 à 20) pour établir une interface assurant le passage des pièces à travers ledit espace (15), entre le secteur vibrant et le secteur non vibrant, sans qu'elles tombent dans cet espace.

## Description

La présente invention se rapporte aux installations délivrant, une à une, des pièces de petites dimensions initialement disposées en vrac et qui doivent ensuite être prises en charge par des équipements de fabrication, de montage, d'assemblage, de traitement,.....

L'invention concerne, plus particulièrement, un dispositif de fourniture de pièces à bol vibrant. Celui-ci, selon une technologie bien connue, est monté sur un support générant des vibrations qui impriment aux pièces un mouvement de rotation autour de l'axe vertical du système. Ce mouvement amène les pièces à s'engager sur une rampe hélicoïdale montante ménagée sur la paroi latérale du bol et à y cheminer jusqu'à son sommet.

Au terme de leur progression, les pièces, initialement présentées dans une position aléatoire, se trouvent toutes orientées de la même manière, après que celles dont la position ne peut être corrigée ou qui présentent une anomalie de forme aient été éliminées.

Lorsque les pièces quittent le sommet de la rampe hélicoïdale, elles s'engagent une à une dans un couloir d'alimentation qui alimente, en général, un manipulateur assurant leur transfert sur le produit auquel elles doivent être incorporées.

Le passage des pièces du bol vibrant au couloir d'alimentation qui, lui, ne vibre pas, est un endroit critique. Il est nécessaire, en effet, de ménager un léger espace entre la zone vibrante et la zone non vibrante afin de les découpler mécaniquement. Or, cet espace doit être, à la fois, suffisamment étroit pour que les pièces n'y tombent pas, mais suffisamment large pour éviter le contact entre les deux zones. Généralement, l'espace est de 0,25 mm. A l'évidence, cela pose un problème lorsqu'il s'agit de transporter des pièces de très petites dimensions.

La présente invention a pour but d'apporter une solution à ce problème.

De façon plus précise, l'invention concerne un dispositif de fourniture de pièces de petites dimensions, du type comportant :
- un bol vibrant capable de délivrer les pièces, une à une, sur un rail dans lequel elles se déplacent sous l'effet des vibrations du bol, et
- un couloir d'alimentation non vibrant disposé dans le prolongement du rail pour recevoir les pièces, mais séparé de lui par un espace destiné à éviter tout contact entre eux.

Selon l'invention, le dispositif comporte des moyens pour établir une interface assurant le passage des pièces à travers ledit espace, sans qu'elles tombent dans cet espace.

De façon avantageuse, ces moyens d'interface comportent, au moins, une première lame souple munie, à une première extrémité, d'une fenêtre dimensionnée et conformée de manière à laisser passer librement les pièces sans modifier leur orientation, cette lame étant fixée au couloir, à sa deuxième extrémité, par l'intermédiaire d'une entretoise.

D'autres caractéristiques de l'invention ressortiront de la description qui va suivre, faite en regard du dessin annexé, dans lequel :
- les figures 1 et 2 représentent schématiquement le dispositif vu respectivement de dessus et en coupe selon II-II ; et
- la figure 3 est une vue de côté des lames du dispositif depuis le plan III-III.

Les figures montrent en 10 l'extrémité du rail de sortie prolongeant la rampe hélicoïdale d'un bol vibrant classique (non représenté). Ce rail, d'axe II-II, est doté d'une rainure centrale 11 dans laquelle des pièces 12, toutes orientées de la même manière, progressent une à une sous l'effet des vibrations du bol. Ces pièces ont généralement une dimension, dans le sens du rail, qui peut aller, environ, de 0,2 à 2 mm. La rainure 11 présente une section dimensionnée et conformée de manière telle que les pièces s'y déplacent librement tout en gardant leur orientation.

Dans le prolongement du rail 10, selon le même axe II-II et à une distance de, typiquement 0,75 mm, se trouve l'extrémité d'un couloir d'alimentation 13 doté d'une rainure centrale 14 identique à la rainure 11 et lui faisant face en parfait alignement. Ce couloir alimente, de manière classique, un manipulateur destiné à transférer les pièces 12 sur le produit auquel elles sont destinées.

Selon l'invention, l'espace 15 qui sépare les extrémités du rail vibrant 10 et du couloir non vibrant 13 reçoit deux lames de liaison souples parallèles 16 (16a-16b), avantageusement réalisées en un acier à ressort et ayant, typiquement, une épaisseur de 0,3 mm. Ces lames sont identiques et fixées dans leur partie inférieure sur l'extrémité du couloir 13, perpendiculairement à l'axe II-II, à l'aide de vis 17 représentées simplement par un pointillé. On notera essentiellement, d'une part, que les deux lames 16 sont séparées, à l'endroit des vis, par une première entretoise en acier 18 ayant une épaisseur de 0,05 mm et, d'autre part, qu'une deuxième entretoise 19, identique à la première, établit un espace entre la lame aval 16a et le couloir 13. L'espace 15 ayant, comme déjà mentionné, une épaisseur de 0,75 mm, la distance qui sépare la lame amont 16b du rail 10 est de 0,05 mm.

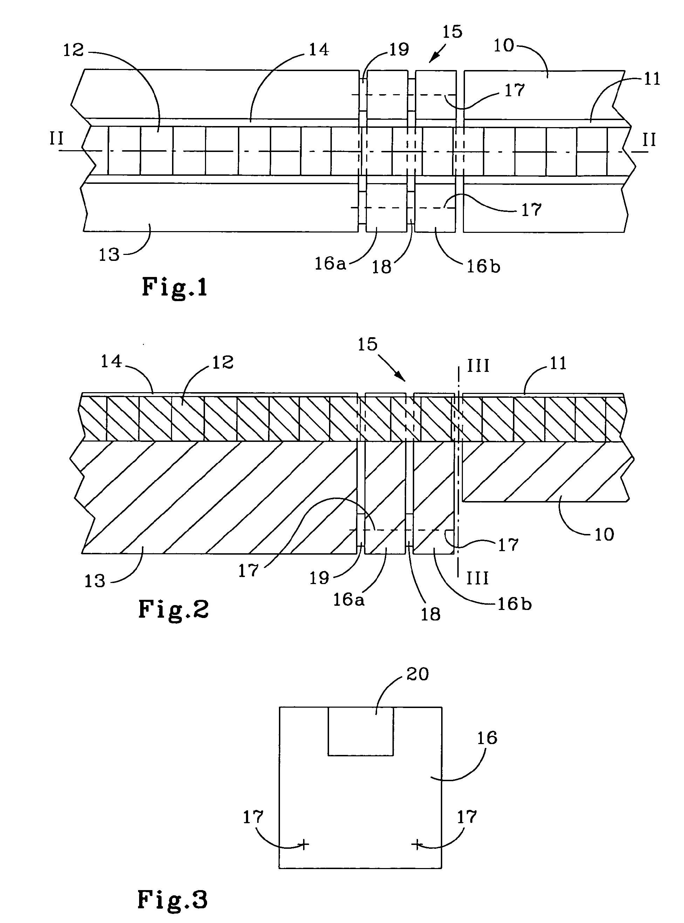

Comme le montre mieux la figure 3, les deux lames 16 sont munies chacune, à leur partie supérieure, d'une fenêtre 20 de forme et de dimensions sensiblement identiques à celles des rainures 11 et 14. Les fenêtres 20 sont en parfait alignement avec les deux rainures. La fenêtre de la figure 3 est simplement rectangulaire. Il va de soi, cependant, que toute autre forme peut être adoptée de manière à correspondre au profil des pièces et/ou lorsque le couloir d'alimentation a la fonction de retourner les pièces.

En fonctionnement, les pièces 12 qui se présentent une à une à la sortie du rail vibrant 10 vont traverser l'espace 15 pour pénétrer dans le couloir non vibrant 13, toujours poussées par celles qui les suivent, en restant donc soumises aux vibrations imprimées par le bol. La présence des deux lames 16 dans cet espace a alors pour effet que les pièces ne risquent pas de tomber entre le rail 10 et le couloir 13 puisque les trois intervalles qui les menacent ont une dimension (0,05 mm) nettement inférieure à la leur (0,2 mm au minimum). On remarquera, par ailleurs, que la souplesse des lames leur permet, lors du démarrage du bol vibrant, de bien amortir ses premières vibrations, généralement de plus forte amplitude que les vibrations en fonctionnement normal. Ainsi, les lames 16 constituent une interface idéale entre le rail vibrant et le couloir non vibrant.

La présente description a été faite en se référant à l'utilisation de deux lames mais rien n'interdit d'en utiliser une seule ou plus de deux, leur épaisseur et l'espace 15 étant alors déterminés de manière à découpler le rail du couloir sans risquer de perdre des pièces. Les essais montrent cependant que le dispositif à deux lames, tel que décrit ci-dessus, remplit de façon optimale la fonction recherchée.

## Revendications

1. Dispositif de fourniture de pièces de petites dimensions, comportant :
- un bol vibrant capable de délivrer les pièces (12), une à une, sur un rail (10) dans lequel elles se déplacent sous l'effet des vibrations du bol, et
- un couloir d'alimentation non vibrant (13) disposé dans le prolongement du rail pour recevoir les pièces, mais séparé de lui par un espace (15) destiné à éviter tout contact entre eux,
**caractérisé en ce qu'**il comporte des moyens (16 à 20) pour établir une interface assurant le passage des pièces à travers ledit espace (15), sans qu'elles tombent dans cet espace.

2. Dispositif selon la revendication 1, **caractérisé en ce que** lesdits moyens comportent, au moins, une première lame souple (16a) munie, à une première extrémité, d'une fenêtre (20) dimensionnée et conformée de manière à laisser passer librement les pièces (12) sans modifier leur orientation, ladite lame étant fixée au couloir (13), à sa deuxième extrémité, par l'intermédiaire d'une entretoise (19).

3. Dispositif selon la revendication 2, **caractérisé en ce que** lesdits moyens comportent, également fixée au couloir (13), une deuxième lame souple (16b) identique à la première (16a), parallèle à elle et séparée d'elle par une entretoise (18).

4. Dispositif selon la revendication 3, **caractérisé en ce que** lesdites lames (16a, 16b) sont en acier à ressort.
